Europäisches Patentamt

European Patent Office

Office européen des brevets

(11) Veröffentlichungsnummer: **0 281 915 B1**

(12) **EUROPÄISCHE PATENTSCHRIFT**

(45) Veröffentlichungstag der Patentschrift: **14.10.92**

(21) Anmeldenummer: **88103154.6**

(22) Anmeldetag: **02.03.88**

(51) Int. Cl.⁵: **B60R 13/06**, B60R 13/04

---

(54) **Profilleiste mit Halter.**

---

(30) Priorität: **10.03.87 DE 3707595**

(43) Veröffentlichungstag der Anmeldung:
**14.09.88 Patentblatt 88/37**

(45) Bekanntmachung des Hinweises auf die
Patenterteilung:
**14.10.92 Patentblatt 92/42**

(84) Benannte Vertragsstaaten:
**BE DE ES FR IT NL**

(56) Entgegenhaltungen:
**DE-A- 3 100 270**
**DE-A- 3 235 524**

(73) Patentinhaber: **Gebr. Happich GmbH**
**Postfach 10 02 49 Clausenbrücke 1**
**W-5600 Wuppertal 1(DE)**

(72) Erfinder: **Marcus, Armin**
**Florastrasse 42**
**W-5620 Velbert 15(DE)**
Erfinder: **Frenzel, Hans**
**Werlestrasse 81**
**W-5600 Wuppertal 2(DE)**

# Beschreibung

Die Erfindung bezieht sich auf eine Profilleiste mit Halter, insbesondere zur Spaltabdeckung od. dgl. an Fahrzeugen, vornehmlich Bussen, wobei der bzw. jeder Halter mit der Profilleiste verrastbar ist.

Zum Abdecken von Spalten an Fahrzeugen, wie sie z.B. bei Bussen u.a. zwischen den Fensterscheiben und der Brüstung, zwischen den Fensterscheiben und dem Dach oder im Kofferklappenbereich vorhanden sind, werden üblicherweise Profilleisten eingesetzt. Die Befestigung der Profilleisten erfolgt dabei im allgemeinen mittels an der Fahrzeugkarosserie durch Schweißen, Kleben, Schrauben, Aufklipsen u. dgl. angeordneter Halter und durch eine Klipsverbindung zwischen den Haltern und den Profilleisten. Nachteilig an dieser herkömmlichen Befestigungsart ist der Umstand, daß eine Ausrichtung der Profilleisten senkrecht zu ihren Längsachsen nicht möglich ist, weil zum einen die Halter starr mit der Fahrzeugkarosserie und zum anderen die Profilleisten starr mit den Haltern verbunden sind. Es hat sich aber gezeigt, daß es aus ästhetischen Gründen oftmals erwünscht ist, eine Ausrichtung einer Profilleiste senkrecht zu ihrer Längsachse vornehmen zu können. Eine solche Ausrichtung kann z.B. dann erwünscht sein, wenn die Anordnung oder das Gewicht der Bus-Innenausstattung nicht mit dem Gewicht des Motors in Einklang steht, wodurch sich eine gewisse Schräglage des Busses einstellen kann. Eine solche Schräglage könnte durch eine Höhenverstellung der an den Außenseiten des Busses befindlichen Profilleisten optisch ausgeglichen werden.

Hier setzt nun die Erfindung ein, der die Aufgabe zugrundeliegt, die aufgezeigten Nachteile zu beseitigen und eine Möglichkeit zu schaffen, eine Ausrichtung einer Profilleiste der eingangs genannten Art senkrecht zu ihrer Längsachse mit einfachen und kostengünstigen Mitteln, insbesondere auch schnell und problemlos durchführen zu können.

Zur Lösung dieser Aufgabe ist erfindungsgemäß vorgesehen, daß der Halter zum Zwecke einer Ausrichtbarkeit der Profilleiste senkrecht zu ihrer Längsachse eine ein Einrasten der Profilleiste in auswählbaren Höhenlagen ermöglichende Ausbildung aufweist.

Gemäß einer bevorzugten Ausführungsform der Erfindung, weist der Halter ein an der Fahrzeugkarosserie befestigbares Trägerteil auf, das ein mit der Profilleiste kraft- oder formschlüssig in Verbindung stehendes Zwischenglied und eine zwischen dem Trägerteil und dem Zwischenglied senkrecht zur Längsachse der Profilleiste verschiebbar angeordnete Klammer trägt, die ein hinterschnittenes Klammermaul zum Einklipsen eines mit einer Rasthinterschneidung versehenen Steges der Profilleiste aufweist. Hierdurch ergibt sich der Vorteil, daß das Trägerteil zu einem beliebigen Zeitpunkt fest an der Fahrzeugkarosserie und die Profilleiste zu einem Zeitpunkt am Trägerteil angeordnet werden kann, an dem erkennbar ist, ob und ggf. in welchem Maße eine Horizontalausrichtung der Profilleiste erforderlich ist.

Eine Ausgestaltung der Erfindung sieht vor, daß das Trägerteil einen hutprofilartigen Querschnitt mit von der Fahrzeugkarosserie abstehenden Flanschen aufweist, die von Hakenansätzen am Zwischenglied hintergriffen sind. Dabei kann ein Hakenansatz des Zwischenglieds über einen Flansch des Trägerteils gehängt und der andere Hakenansatz über den zweiten Flansch geklipst sein. Diese Ausbildung bietet nicht nur den Vorteil einer schnell und einfach durchzuführenden Montage sondern darüber hinaus auch die Möglichkeit einer Demontage durch Aushebeln der Klipsverbindung, was bei Nachlackierungsarbeiten od. dgl. äußerst wichtig ist.

In weiterer Ausgestaltung der Erfindung ist vorgesehen, daß das Trägerteil mit einem rückseitigen, zum Einsetzen in einen Spalt dienenden Verankerungssteg ausgebildet ist. Hierdurch kann das Trägerteil schon beim Aufbau der Fahrzeugkarosserie mit montiert werden, wobei sich die Möglichkeit anbietet, den Verankerungssteg mittels eines Doppelklebebandes od. dgl. z.B. an der Fensterbrüstung vorläufig zu befestigen und eine endgültige Festlegung dadurch zu bewerkstelligen, daß der Verankerungssteg in dem die Fensterscheiben im Fensterrahmen haltenden Kleber eingebettet wird.

Zweckmäßigerweise weist das Zwischenglied an der dem Trägerteil zugewandten Seite eine zur Aufnahme der Klammer dienende Nut auf. Diese Nut sollte so ausgebildet sein, daß die Klammer darin zwar verschiebbeweglich jedoch gegen ein Herausfallen gesichert aufgenommen ist.

Eine weitere vorteilhafte Ausgestaltung der Erfindung besteht darin, daß das Zwischenglied und die Profilleiste an ihren miteinander in Berührung kommenden Flächen mit einer ineinandergreifenden Verzahnung ausgebildet sind.

Gemäß der Erfindung kann weiterhin vorgesehen sein, daß die Klammer aus einem Federblechstreifen gebildet ist, im etwa mittigen Bereich eine topfartige, sich mit dem Boden auf dem Trägerteil abstützende Vertiefung und der Vertiefung gegenüberliegend freigeschnittene, hochgestellte und durch eine weitere Abwinklung voneinander wegstrebende Lappen aufweist, die das hinterschnittene Klammermaul bilden.

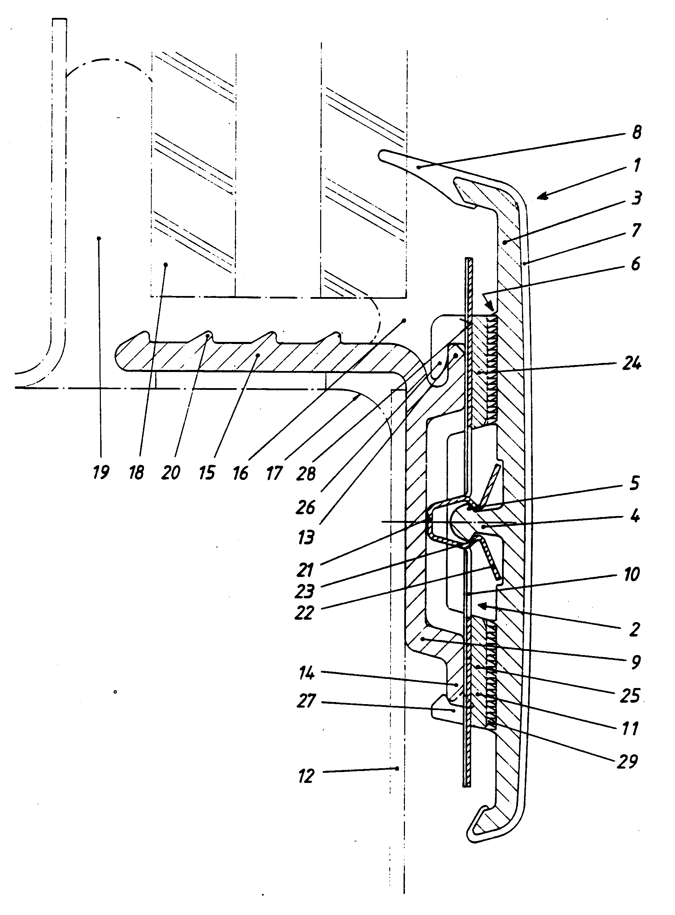

Die Erfindung wird nachfolgend anhand der Zeichnung, die ein Ausführungsbeispiel zeigt, näher erläutert. Dabei zeigt die einzige Fig. einen Querschnitt durch einen lediglich strichpunktiert angedeuteten Fahrzeugseitenwandbereich mit einer Fensteröffnung und einer darin eingesetzten Scheibe sowie eine Profilleisten-Halter-Kombination in einem Einbaubeispiel.

Im einzelnen zeigt die Zeichnung eine Profilleiste 1 und einen Halter 2. Die Profilleiste 1 ist als Aluminiumstrangpreßprofil 3 ausgebildet, weist rückseitig einen einstückig angeformten Steg 4 mit beidseitigen Rasthinterschneidungen 5, weiterhin rückseitig mehrere einstückig angeformte Zähne 6 sowie vorderseitig eine auch die Randkanten des Aluminiumstrangpreßprofils 3 umgreifende Beschichtung 7 aus Kunststoffmaterial auf, die an einem Randkantenbereich des Aluminiumstrangpreßprofils 3 als Anlagelippe 8 ausgebildet ist.

Der Halter 2 für die Profilleiste 1 weist einen dreiteiligen Aufbau auf und besteht aus einem Trägerteil 9, einer Klammer 10 sowie aus einem Zwischenglied 11.

Das Trägerteil 9, das an der Fahrzeugkarosserie, wie an der Beplankung 12, befestigbar ist, hat einen hutprofilartigen Querschnitt mit zwei von der Fahrzeugkarosserie abstehenden, jedoch etwa parallel zu dieser ausgerichteten Flanschen 13 und 14. An einem Randkantenbereich, und zwar an dem, der dem Flansch 13 benachbart ist, ist das Trägerteil 9 einstückig mit einem nach hinten unter einem Winkel von etwa 90 ° wegstrebenden Verankerungssteg 15 einstückig ausgebildet. Der Verankerungssteg 15 greift in einen Karosseriespalt 16 ein, der im dargestellten Ausführungsbeispiel zwischen der Brüstung 17 und der Glasscheibe 18 ausgebildet ist, und ist im montierten Zustand im Klebermaterial 19, mit dem die Glasscheibe 18, bei der es sich auch um eine Doppelscheibe handeln kann, eingebettet. Zur besseren Verankerung tragen widerhakenförmige Verdickungen 20 des Verankerungssteges 15 bei. Das Trägerteil 9 besteht zweckmäßigerweise aus dem Abschnitt eines Aluminiumstrangpreßprofils.

Die Klammer 10 besteht aus einem Federblechstreifen und weist im etwa mittigen Bereich eine topfartige, sich im montierten Zustand mit dem Boden auf dem Trägerteil 9 abstützende Vertiefung 21 und der Vertiefung 21 gegenüberliegend zwei freigeschnittene, hochgestellte und durch eine weitere Abwinklung voneinander wegstrebende Lappen 22 auf, die ein hinterschnittenes Klammermaul 23 zum Einführen und Einklipsen des Steges 4 der Profilleiste 1 bilden.

Das Zwischenglied 11 ist zweckmäßigerweise als Kunststoff-Spritzgußteil ausgebildet und weist einen hutprofilartigen Querschnitt mit solcher Gestaltung auf, die ein paßgerechtes Einstecken des Zwischenglieds 11 in die Hutöffnung des Trägerteils 9 zuläßt. An den Flanschen 24, 25 des Zwischenglieds 11 sind hakenförmige Ansätze 26, 27 angeformt, die im montierten Zustand die Flansche 13, 14 des Trägerteils 9 hintergreifen. Dabei hintergreift der hakenförmige Ansatz 26 den Flansch 13 relativ weit, so daß hier nur ein Aufschieben oder Einhängen möglich ist, während der hakenförmige Ansatz 27 den Flansch 14 nur geringfügig hintergreift mit dem Vorteil, daß hier eine Klipsmontage und damit auch, nicht zuletzt wegen der dargestellten Anlaufschrägen, eine Demontage möglich ist. Weiterhin weist das Zwischenglied 11 eine durchlaufende, die hakenförmigen Ansätze 26 und 27 jeweils trennende Nut 28 zur Aufnahme der Klammer 10 auf. Die Nut 28, die im mittleren Bereich des Zwischenglieds 11 als Durchgangsöffnung für die topfförmige Vertiefung 21 der Klammer 10 ausgebildet ist, kann Mittel, z.B. in Form nicht dargestellter, den Nuteingang verengender Materialverdickungen aufweisen, die beim Einstecken der Klammer 10 in die Nut leicht überwindbar sind, jedoch ein Herausfallen der Klammer 10 aus der Nut 28 verhindern. Schließlich weist das Zwischenglied 11 an der mit der Profilleiste 1 bzw. mit dem Aluminiumstrangpreßprofil 3 in Berührung kommenden Flächen seiner Flansche 24 und 25 jeweils eine Verzahnung 29 auf, in die jeweils ein Zahn 6 der Profilleiste 1 einzugreifen vermag.

Bei der Montage wird zunächst das Trägerteil 9 an der Fahrzeugkarosserie festgelegt, und zwar z.B. zu einem Zeitpunkt, der mit der Verglasung zusammenfällt. Die Montage der Profilleiste 1 kann zu einem wesentlich späteren Zeitpunkt erfolgen. Bei der Profilleistenmontage wird zunächst der Halter 2 vervollständigt, indem die Klammer 10 in die Nut des Zwischenglieds 11 eingebracht und letzteres am Trägerteil 9 durch oberseitiges Einhängen und unterseitiges Einklipsen angeordnet wird. Während hiernach zwischen Trägerteil 9 und Zwischenglied 11 eine starre Verbindung besteht, ist für die zwischen diesen Teilen aufgenommene Klammer 10 die Möglichkeit einer Relativbewegung senkrecht zur Längsachse der Profilleiste 1 gegeben. Dies wird nun für eine Ausrichtung der Profilleiste 1 ausgenutzt, indem diese mit dem Steg 4 soweit in des Klammermaul 23 der Klammer 10 eingeführt wird, bis die Klammer 10 eines Korrekturbewegung der Profilleiste 1 nach oben oder unten zu folgen vermag. Sobald die gewünschte Ausrichtung der Profilleiste 1 erreicht ist, wird der Steg 4 derselben vollständig in des Klammermaul 23 eingetrieben, beispielsweise mittels leichter Schläge auf die Außenfläche der Profilleiste 1, wobei es einerseits zur Verklipsung zwischen Steg 4 und Klammermaul 23 und andererseits zur Verrastung zwischen den Verzahnungen 6 und 29 und damit zu einer starren Verbindung zwischen den Einzelteilen des Halters 2 und der Profilleiste 1 kommt.

Es versteht sich am Rande, daß für die Festlegung einer Profilleiste 1 mehrere Halter 2 in Reihe nebeneinander anzuordnen sind.

**Patentansprüche**

1. Profilleiste (1) mit Halter (2), insbesondere zur Spaltabdeckung od. dgl. an Fahrzeugen, vornehmlich Bussen, wobei der bzw. jeder Halter (2) mit der Profilleiste (1) verrastbar ist, dadurch gekennzeichnet, daß der Halter (2) zum Zwecke einer Ausrichtbarkeit der Profilleiste (1) senkrecht zu ihrer Längsachse eine ein Einrasten der Profilleiste (1) in auswählbaren Höhenlagen ermöglichende Ausbildung aufweist.

2. Profilleiste nach Anspruch 1, dadurch gekennzeichnet, daß der Halter (2) ein an der Fahrzeugkarosserie befestigbares Trägerteil (9) aufweist, das ein mit der Profilleiste (1) kraft- oder formschlüssig in Verbindung stehendes Zwischenglied (11) und eine zwischen dem Trägerteil (9) und dem Zwischenglied (11) senkrecht zur Längsachse der Profilleiste (1) verschiebbar angeordnete Klammer (10) trägt, die ein hinterschnittenes Klammermaul (23) zum Einklipsen eines mit einer Rasthinterschneidung (5) versehenen Steges (4) der Profilleiste (1) aufweist.

3. Profilleiste nach Anspruch 2, dadurch gekennzeichnet, daß das Trägerteil (9) einen hutprofilartigen Querschnitt mit von der Fahrzeugkarosserie abstehenden Flanschen (13, 14) aufweist, die von Hakenansätzen (26, 27) am Zwischenglied (11) hintergriffen sind.

4. Profilleiste nach Anspruch 2, dadurch gekennzeichnet, daß ein Hakenansatz (26) des Zwischengliedes (11) über einen Flansch (13) des Trägerteils (9) gehängt und der andere Hakenansatz (27) über den zweiten Flansch (14) geklipst ist.

5. Profilleiste nach einem oder mehreren der Ansprüche 2 bis 4, dadurch gekennzeichnet, daß das Trägerteil (9) mit einem rückseitigen, zum Einsetzen in einen Spalt (16) dienenden Verankerungssteg (15) ausgebildet ist.

6. Profilleiste nach einem oder mehreren der Ansprüche 2 bis 5, dadurch gekennzeichnet, daß das Zwischenglied (11) an der dem Trägerteil (9) zugewandten Seite eine zur Aufnahme der Klammer (10) dienende Nut (28) aufweist.

7. Profilleiste nach einem oder mehreren der Ansprüche 2 bis 6, dadurch gekennzeichnet, daß das Zwischenglied (11) und die Profilleiste (1) an ihren miteinander in Berührung kommenden Flächen mit einer ineinandergreifenden Verzahnung (6, 29) ausgebildet sind.

8. Profilleiste nach einem oder mehreren der Ansprüche 2 bis 7, dadurch gekennzeichnet, daß die Klammer (10) aus einem Federblechstreifen gebildet ist, im etwa mittigen Bereich eine topfartige, sich mit dem Boden auf dem Trägerteil (9) abstützende Vertiefung (21) und der Vertiefung (21) gegenüberliegend freigeschnittene, hochgestellte und durch eine weitere Abwinklung voneinander wegstrebende Lappen (22) aufweist, die das hinterschnittene Klammermaul (23) bilden.

**Claims**

1. A profiled strip (1) with a holder (2), especially for covering gaps or the like on vehicles, predominantly buses, where the or each holder (2) is capable of snap engagement with the profiled strip (1), characterised in that the holder (2) has a formation permitting a snap engagement of the profiled strip (1) in selectable height positions, for the purpose of orienting the profiled strip (1) perpendicular to its longitudinal axis.

2. A profiled strip according to Claim 1, characterised in that the holder (2) comprises a carrier part (9) securable to the vehicle body, which carrier part carries an intermediate member (11) in connection by virtue of shape or of force-application with the profiled strip (1) and a clip (10) arranged displaceably between the carrier part (9) and the intermediate member (11) perpendicularly to the longitudinal axis of the profiled strip (1), which clip comprises an undercut clip mouth (23) for the clipping in of a web (4) of the profiled strip, which is provided with a detent undercutting (5).

3. A profiled strip according to Claim 2, characterised in that the carrier part (9) comprises a cross-section of hat-shaped type profile with flanges (13, 14) protruding from the vehicle body, behind which flanges there grasp hook-like extensions (26, 27) of the intermediate member (11).

4. A profiled strip according to Claim 2, characterised in that one hook-like projection (26) of the intermediate member (11) is hooked over a flange (13) of the carrier part (9) and the other hook-like projection (27) is clipped over the second flange (14).

5. A profiled strip according to any one or more of Claims 2 to 4, characterised in that the carrier part (9) is formed with a rear anchoring web (15) serving for insertion into a gap (16).

6. A profiled strip according to any one or more of Claims 2 to 5, characterised in that the intermediate member (11) possesses on the side facing the carrier part (9) a groove (28) serving to receive the clip (10).

7. A profiled strip according to any one or more of Claims 2 to 6, characterised in that the intermediate member (11) and the profiled strip (1) are formed with an interengaging toothing (6, 29) on their surfaces which come into contact with one another.

8. A profiled strip according to any one or more of Claims 2 to 7, characterised in that the clip (10) is formed from a spring metal strip and comprises approximately in the middle region a pot-like depression (21) resting with the bottom on the carrier part (9), and opposite to the depression (21) comprises lugs (22) which are cut free, set upwards and thrust apart by a further angling off, which lugs form the undercut clip mouth (23).

**Revendications**

1. Baguette profilée (1) avec support (2), destinée en particulier à servir de couvre-joint ou similaire sur des véhicules automobiles, notamment des autobus, le ou chaque support (2) pouvant s'accrocher avec la baguette (1), caractérisée en ce que pour permettre l'orientation de la baguette (1) perpendiculairement à son axe longitudinal, le support (2) présente une configuration permettant le clipsage de la baguette (1) à des hauteurs pouvant être choisies.

2. Baguette profilée selon la revendication 1, caractérisée en ce que le support (2) comporte une partie de support (9) à fixer sur la carrosserie du véhicule, laquelle partie de support porte un organe intermédiaire (11), en prise par force ou par concordance de forme avec la baguette (1), et une agrafe (10) placée entre la partie de support (9) et l'organe intermédiaire (11), de manière à pouvoir coulisser perpendiculairement à l'axe longitudinal de la baguette (1), laquelle agrafe présente une mâchoire (23) détalonnée en vue d'y clipser une nervure (4) de la baguette pourvue d'un détalonnage d'arrêt (5).

3. Baguette profilée selon la revendication 2, caractérisée en ce que la partie de support (9) a une section transversale en forme de profilé en chapeau avec des brides (13, 14), saillantes par rapport à la carrosserie du véhicule, derrière lesquelles passent des appendices en crochets (26, 27) de l'organe intermédiaire (11).

4. Baguette profilée selon la revendication 2, caractérisée en ce qu'un appendice en crochet (26) de l'organe intermédiaire (11) est accroché sur une bride (13) de la partie de support (9) et en ce que l'autre appendice en crochet (27) est clipsé sur la deuxième bride (14).

5. Baguette profilée selon une ou plusieurs des revendications 2 à 4, caractérisée en ce que la partie de support (9) est conçue avec une nervure d'ancrage (15) arrière, destinée à s'insérer dans une fente (16).

6. Baguette profilée selon une ou plusieurs des revendications 2 à 5, caractérisée en ce que l'organe intermédiaire (11) présente, sur le côté tourné vers la partie de support (9), une rainure (28) servant à loger l'agrafe (10).

7. Baguette profilée selon une ou plusieurs des revendications 2 à 6, caractérisée en ce que l'organe intermédiaire (11) et la baguette (1) sont conçus, sur leurs surfaces venant en contact l'une avec l'autre, avec des dentures (6, 29) s'engageant l'une dans l'autre.

8. Baguette profilée selon une ou plusieurs des revendications 2 à 7, caractérisée en ce que l'agrafe (10) est formée par un ruban en tôle formant ressort, et présente, dans la région à peu près centrale, un creux (21) en forme de cuvette, prenant appui par son fond sur la partie de support (9), ainsi que des pattes (22) découpées, face au creux (21), repliées verticalement et écartées l'une de l'autre par un autre coude, lesquelles pattes forment la mâchoire (23) détalonnée.